# EUROPEAN PATENT SPECIFICATION

(11) **EP 4 009 307 B1**
(45) Date of publication and mention of the grant of the patent: **22.02.2023**
(21) Application number: 20461588.4
(22) Date of filing: 04.12.2020
(51) Int. Cl.: G09B 23/28

(54) **DEVICE AND SYSTEM FOR SIMULATING TRANSCATHETER OPERATIONS**
VORRICHTUNG UND SYSTEM ZUR SIMULATION VON TRANSKATHETEROPERATIONEN
DISPOSITIF ET SYSTÈME POUR SIMULER DES OPÉRATIONS DE TRANSCATHÉTER

(43) Date of publication of application: 08.06.2022
(73) Proprietor: Medical Simulation Technologies Sp. z o.o., 30-055 Krakow (PL)
(72) Inventor: Cempla, Michal, 30-608 Krakow (PL); Dziwinski, Tomasz, 44-217 Rybnik (PL); Piatek, Pawel, 31-221 Krakow (PL); Gackowski, Andrzej, 31-347 Krakow (PL)
(74) Representative: AOMB Polska Sp. z.o.o.

(56) References cited:
- WO-A1-98/03954
- WO-A1-03/050783
- WO-A1-2004/051602

## Description

This invention relates to the field of devices/systems designed for improving the skills necessary to perform operations, by practising on a machine that simulates the properties of selected body parts of living organisms. More specifically, this invention concerns electromechanical devices/systems for practising transcatheter operations with the use of surgical instruments.

In addition to practising on animals and cadavers, people who wish to improve their skills necessary to perform medical procedures may also train using simulators of body organs, e.g. the heart, before they start performing such operations on living people. However, creating a faithful model of organs entails many difficulties and there are various training systems adapted so as to improve specific skills.

Development of devices for practising transcatheter interventions is complicated because they have to measure many coaxial instruments very precisely and simulate physical phenomena such as the strength of frictional resistances or the strength of the pulsations and movements of organs, which are felt by the trainee holding the instruments in his/her hands.

In the state of the art, there are known devices/systems that reproduce at least some of the properties of the human body and can be used to improve the skills necessary to perform transcatheter operations. US2006127864A1 reveals a device for practising the performance of such operations, which uses a system of several trolleys that can move along a single straight line, as well as a system measuring the position of each of these trolleys. The user enters the surgical instruments through an opening in the device, thus achieving contact with the trolleys, and obtains feedback in the form of computer visualization of the position of the surgical instruments and physical stimuli - resistance generated by the trolleys. Such a solution is disadvantageous due to the greater complexity of electronic sensors for measuring linear displacement in comparison with sensors for measuring the angle of rotation in the case of rotational motion. The drive that makes it possible to exert physical stimuli (the so-called *"force feedback"*) is more complicated for linear motion than for rotational motion too. In the cited patent, the authors require the use of telescopic tubes between the carriages, which increases the cost and reduces the reliability of the proposed solution (as time passes, dirt between the segments will negatively impact the functioning of the device). Moreover, the solution revealed in said document requires relatively much space for the longitudinal movements of the trolleys.

Also, document US6267599B1 describes a device for practising the performance of transcatheter interventions, in which the surgical instrument is introduced along a straight line. Therefore, this solution - although more compact - is characterized by a more difficult reproduction of said physical stimuli.

Document WO03060783 discloses an apparatus for use in a simulator for an endoscopy system. The apparatus comprises a rotatable disc (2) on which a plurality of rollers (6, 7) are mounted to surround the axis of rotation (4) of the disc. A force feedback motor is provided to resist rotation of the disc (2) and a further motor (12, 13) is provided to resist rotation of at least one of the rollers.

In view of the above, it would be desirable to develop a system for simulating transcatheter operations that would offer much better simulative modulated friction and pulsation forces of organs related to the handling of surgical instruments.

The invention relates to a device for measuring the position of a surgical instrument as defined in independent claim 1 and to a system for simulating transcatheter operations as defined in independent claim 13.

The subject matter of the invention is a device for measuring the position of a surgical instrument, fitted with at least two limiters,
wherein each limiter has a pass-through opening smaller than at least one part of the surgical instrument, through which parts of the surgical instrument are to be inserted,
characterized in that it is in the shape of a rotationally mounted disk, which, on the inner side of its envelope, has a track that serves as a guide for the surgical instrument,
wherein the first limiter is attached to the disk at one of the ends of said track and is configured so that when the surgical instrument is brought to the first stop and a part of the surgical instrument that is larger than the opening in the first limiter is pressed against the first limiter, rotation of the disk is caused,
wherein at least one other limiter is attached to the disk by means of a pivotal measuring arm, and bringing a part of the surgical instrument that is larger than the opening in that other limiter to the second limiter and pressing it against said second limiter causes the second limiter to move,
wherein the pass-through opening for inserting the surgical instrument in said at least one other limiter is smaller than the pass-through opening for inserting the surgical instrument in the limiter that precedes it when viewed from the side from which the surgical instrument is to be inserted, in particular, smaller than the pass-through opening for inserting the surgical instrument in the first limiter,
wherein the disk and each of the limiters are fitted with means of resistance that act - with an appropriately matched force or torque - on the disk and on each of the limiters counteracting their movement under the influence of the pressure from the surgical instrument,
wherein the device additionally has means for measuring the angle of rotation of the disk and the angle of pivoting of each of at least one measuring arm and converting the measurement result into an electrical signal.

Preferably, the means of measuring the angle of rotation of the disk take the form of an angle sensor such as an absolute encoder, incremental encoder, potentiometer, or resolver.

Preferably, the means of measuring the angle of pivoting of each of at least one measuring arm take the form of an angle sensor such as an absolute encoder, incremental encoder, or potentiometer.

Preferably, the device is fitted with jaws for locking the surgical instrument, configured so as to lock the surgical instrument in its target position and to unlock it only after the disk returns to its initial/base position.

Preferably, the device has three limiters.

Preferably, the device has four limiters.

Preferably, the device additionally has a guiding element attached to the disk and configured so as to redirect the surgical instrument being inserted from above in relation to the plane of rotation of the disk in the direction concurrent to the track of the disk.

Preferably, all the means of resistance are properly selected from the group of means that comprises springs, parts made of an elastomer, and an electric motor.

Preferably, at least one limiter apart from the first limiter is mounted on a ring that is attached on the external surface of the disk or on a linear guide.

Preferably, it also has optical sensors located behind the first limiter, configured so as to measure the orientation of the surgical instrument.

Preferably, the device additionally has accelerometric sensors located in the casing/handle of the surgical instrument, configured so as to measure the orientation of the surgical instrument.

Preferably - instead of openings smaller than the relevant parts of the surgical instrument - the limiters comprise means of locking the specific part of the surgical instrument, either in the form of a brake or means magnetically affecting the specific part of the surgical instrument.

The subject matter of the invention is also a system for simulating transcatheter operations, which includes:
- a manikin,

- a surgical instrument, especially of the kind used to carry out transcatheter operations,
- a device for measuring the position and, optionally, the orientation of the surgical instrument interacting with the elements of the device, placed inside the manikin,
- a computing device adapted to converting data about measurement of the position and, optionally, orientation of the surgical instrument, as well as to displaying images corresponding to the specific position and optional orientation of the surgical instrument,
characterized in that it comprises the device of the invention for measuring the position of the surgical instrument.

This invention will be presented in more detail in preferable embodiments and with reference to the enclosed drawing, where:
Fig. 1 shows a general diagram of the simulation system of the invention,
Fig. 2 shows an example sectional view of an instrument designed for transseptal puncture,
Fig. 3 shows two projections of the main elements of the device for measuring the position of the surgical instrument,
Fig. 4 shows a sectional view through the disk of the device seen in Fig. 3, and
Fig. 5 shows a diagrammatic view and a top view of the position measuring device with a surgical instrument inserted into it.

Numerical markings:
1 - surgical instrument
2 - limiter
3 - disk
4 - track
5 - pivotal measuring arm
6 - guiding element
7 - manikin
8 - computing device with a screen

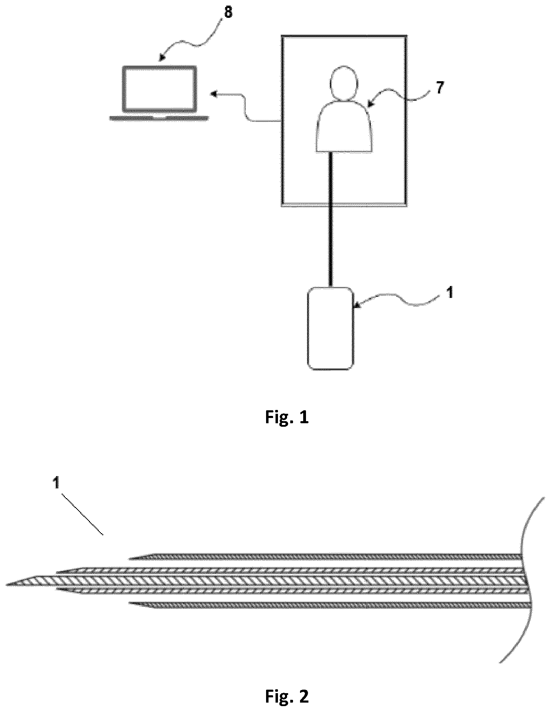

Fig. 1 presents a general diagram of the simulation system of the invention, in which three main factors can be distinguished: the manikin 7 fitted with the device for measuring the position of the surgical instrument 1, the surgical instrument 1, and the computing device with a screen 8, in this case a computer. The computing device 8, especially a computer, is connected to the manikin 7 as well as to the device that is inside of it, and is adapted so as to receive information about the current position and orientation of individual elements of the surgical instrument(s) 1. Based on the information that reach the computing device 8, images are generated on its screen, which simulate the actual objects that would be seen by the person performing the operation.

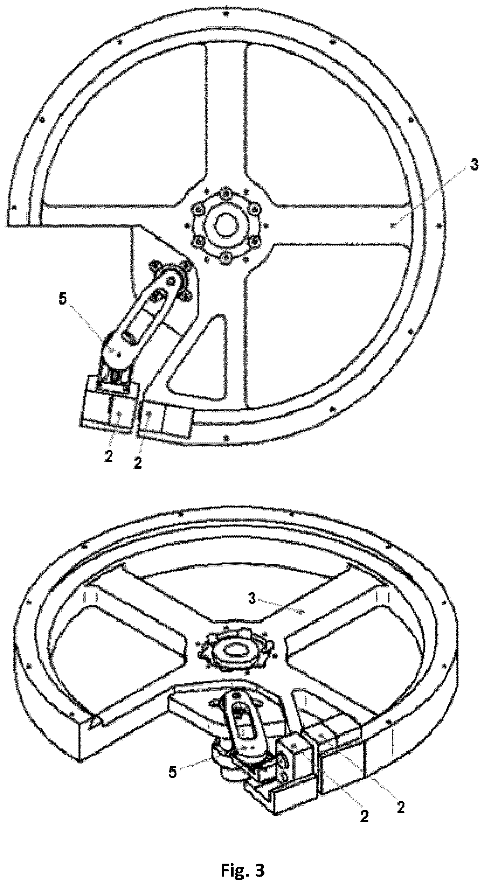

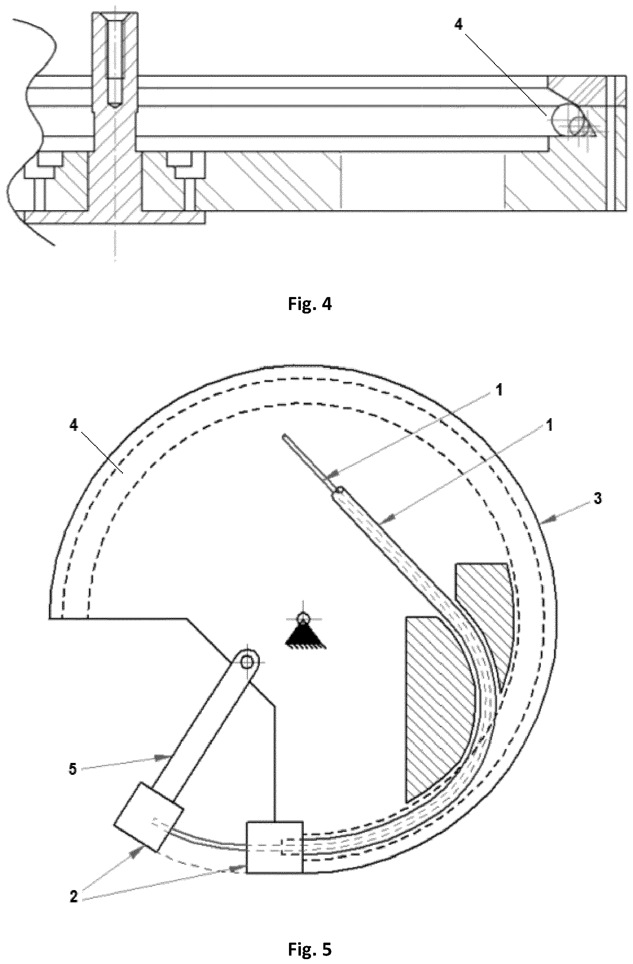

As can be seen in Fig. 3, the main part of the device for measuring the position of surgical instruments 1 is a spatially shaped rotationally mounted disk 3. On the inner side of the envelope of the disk 3 (cf. Fig. 4) there is a track 4 that is a kind of guide for the surgical instrument 1, which track 4 can be milled to ensure accuracy of execution if the disks 3 are made of metal. Said track 4 is generally V-shaped (cf. Fig. 4) with the vertex closer to the outer lateral surface of the disk 3. Thanks to the tapered profile of the track 4, knowing its exact geometry and knowing the geometry (size - especially the diameter) of the elements of the surgical instruments 1 (cf. Fig. 2), it is possible to precisely determine the path (radius of the circle) along which the given instrument 1 (or part thereof) moves.

The disk 3 is rotationally mounted on an axle and can rotate under the influence of the surgical instrument 1 being inserted along the track 4 when it encounters an obstacle - the first limiter 2 - and starts pushing against it. The force needed to cause rotation of the disk 3 can be adjusted using the first means of resistance, e.g., a spring, a part made of an elastomer, or an electric motor, which means are connected to the shaft/axle on which the disk 3 is mounted. By exerting torque on the disk 3, the following are ensured: return of the disk 3 to its initial position, and constant contact between the tip of the surgical instrument 1 and the limiter 2, which is important for accurately measuring the position of said instrument 1. In addition, by modulating the torque, it is possible to achieve the effect of a friction force and pulsation that simulate, e.g., touching the wall of, say, a beating heart with the instrument 1. In turn, by appropriately selecting or replacing the first means of resistance, it is possible to simulate the behaviour of different parts of the human body, i.e., those that create more resistance and those that create less resistance to surgical instruments 1 being inserted through them.

The rotation of the disk 3 in relation to its initial position is measured using the angle sensor, e.g., an absolute encoder, incremental encoder, potentiometer, or resolver.

Another part of the device for measuring the position of surgical instruments is the set of limiters 2, which, like those known from the document US2006127864A1, successively prevent the possibility of the widest parts of the surgical instrument 1 passing through, but enable smaller elements (e.g. with a smaller diameter) to pass through (cf. Fig. 2). In the device of the invention, said set of limiters 2 includes at least two limiters 2.

The first limiter 2 is attached to the disk 3 at one of the ends of the V-shaped track 4 - this limiter 2 is smaller than the size (e.g. diameter) of the widest part of the specific surgical instrument 1, but allows the second largest part of that surgical instrument 1 to pass through. When the surgical instrument 1 rests on the first limiter 2, further insertion of the surgical instrument 1 causes rotation of the disk 3 and causes a return torque generated by the first means of resistance.

The second limiter 2 is attached to the disk 3 by means of the pivotal measuring arm 5, and is positioned so that its opening is coaxial to the opening in the first limiter 2. After the surgical instrument 1 (the widest part thereof) rests against the first limiter 2 and after the narrower parts of the surgical instrument 1 are further inserted, the second part of the instrument 1 rests against the second limiter 2 that begins to move under the pressure (i.e. begins to pivot on the measuring arm 5). The measuring arm 5, on which the second limiter 2 is mounted, is essentially rigid and is connected to the means of measuring its pivoting, as well as to the second means of resistance that exert torque on the arm 5 which torque ultimately brings the arm 5 together with the second limiter 2 to the initial position next to the first limiter 2. Preferably, the second means of resistance are analogous to the first means of resistance.

An appropriate number of limiters 2 (i.e. proportionate to the number of concentric instruments) are connected to the disk 3 together with their means of attachment, especially measuring arms 5 - like in the case of the second limiter 2 described above. Preferably, the total number of limiters 2 is two, three, four, or five limiters 2, including the first limiter 2 attached to the disk 3.

Although it has been described above that the second limiter 2 is mounted on the measuring arm 5, in other embodiments the second and further limiters 2 may also be mounted on a different kind of mounting element, e.g., a ring attached to the external surface of the disk 3 or on a linear guide. The means of resistance that exert force/torque on the specific limiter 2 and the means of measuring their position are selected according to the applied types of mountings for the limiters 2.

During work, the computing device 8 processes all the data coming from the device for measuring the position of the surgical instruments 1 and determines the exact position of the surgical instrument 1, displaying images that correspond to the obtained results.

Another preferable element of the system of the invention is the guiding element 6 (the element marked with lines in Fig. 5), which allows proper insertion of the surgical instrument 1 into the track 4 in the disk 3. The surgical instrument 1, being inserted into the manikin 7, preferably approaches the disk 3 from the top in relation to the disk's 3 plane of rotation. The guiding element 6 redirects the surgical instrument 1 in the direction concurrent to the track 4 in the disk 3.

The advantage of the device of the invention and of the system fitted with said device is also the fact that they use fewer moving parts than the solutions known in the state of the art, which increases their reliability, which reliability can be further increased by the use of sealed bearing elements eliminating any penetration of dirt.

## Claims

1. A device for measuring the position of a surgical instrument (1), fitted with at least two limiters (2), wherein each limiter (2) has a pass-through opening smaller than at least one part of the surgical instrument (1), through which parts of the surgical instrument (1) are to be inserted,
said device being in the shape of a rotationally mounted disk (3), which, on the inner side of its envelope, has a track (4) that serves as a guide for the surgical instrument (1),
**characterized in that** the first limiter (2) is attached to the disk (3) at one of the ends of said track (4) and is configured so that when the surgical instrument (1) is brought to the first stop (2) and a part of the surgical instrument (1) that is larger than the opening in the first limiter (2) is pressed against the first limiter (2), rotation of the disk (3) is caused,
wherein at least one other limiter (2) is attached to the disk (3) by means of a pivotal measuring arm (5), and bringing a part of the surgical instrument (1) that is larger than the opening **in that** other limiter (2) to the second limiter (2) and pressing it against said second limiter (2) causes the second limiter to move (2),
wherein the pass-through opening for inserting the surgical instrument (1) in said at least one other limiter (2) is smaller than the pass-through opening for inserting the surgical instrument (1) in the limiter (2) that precedes it when viewed from the side from which the surgical instrument (1) is to be inserted, in particular, smaller than the pass-through opening for inserting the surgical instrument (1) in the first limiter (2),
wherein the disk (3) and each of the limiters (2) are fitted with means of resistance that act - with an appropriately matched force or torque - on the disk (3) and on each of the limiters (2) counteracting their movement under the influence of the pressure from the surgical instrument (1),
wherein the device additionally has means for measuring the angle of rotation of the disk (3) and the angle of pivoting of each of at least one measuring arm (5) and converting the measurement result into an electrical signal.

2. Device according to claim 1 **characterized in that** the means of measuring the angle of rotation of the disk (3) take the form of an angle sensor such as an absolute encoder, incremental encoder, potentiometer, or resolver.

3. Device according to claim 2 **characterized in that** the means of measuring the angle of pivoting of each of at least one measuring arm (5) take the form of an angle sensor such as an absolute encoder, incremental encoder, or potentiometer.

4. Device according to claims 2 or 3, **characterized in that** the device is fitted with jaws for locking the surgical instrument (1), configured so as to lock the surgical instrument (1) in its target position and to unlock it only after the disk (3) returns to its initial/base position.

5. Device according to claims 2, 3, or 4, **characterized in that** it has three limiters (2).

6. Device according to claims 2, 3, 4, or 5, **characterized in that** it has four limiters (2).

7. Device according to claims 2, 3, 4, 5, or 6, **characterized in that** it additionally has a guiding element (6) attached to the disk (3) and configured so as to redirect the surgical instrument (1) being inserted from above in relation to the plane of rotation of the disk (3) in the direction concurrent to the track of the disk (4).

8. Device according to claims 2, 3, 4, 5, 6, or 7, **characterized in that** all the means of resistance are properly selected from the group of means that comprises springs, parts made of an elastomer, and an electric motor.

9. Device according to any of the previous claims, **characterized in that** at least one limiter (2) apart from the first limiter (2) is mounted on a ring that is attached on the external surface of the disk (3) or on a linear guide.

10. Device according to any of the previous claims, **characterized in that** it also has optical sensors located behind the first limiter (2), configured so as to measure the orientation of the surgical instrument (1).

11. Device according to any of the claims from 1 to 10, **characterized in that** it also has accelerometric sensors located in the casing/handle of the surgical instrument (1), configured so as to measure the orientation of the surgical instrument (1).

12. Device according to any of the claims from 1 to 11 **characterized in that** - instead of openings smaller than the relevant parts of the surgical instrument (1) - the limiters (2) comprise means of locking the specific part of the surgical instrument (1), either in the form of a brake or means magnetically affecting the specific part of the surgical instrument (1).

13. A system for simulating transcatheter operations, which includes:
- a manikin (7),
- a surgical instrument (1), especially of the kind used to carry out transcatheter operations,
- a device for measuring the position and, optionally, the orientation of the surgical instrument (1) interacting with the elements of the device, placed inside the manikin (7),
- a computing device (8) adapted to converting data about measurement of the position and, optionally, orientation of the surgical instrument (1), as well as to displaying images corresponding to the specific position and optional orientation of the surgical instrument (1),
**characterized in that** it comprises the device for measuring the position of a surgical instrument (1) specified in any of the claims from 1 to 12.

## Patentansprüche

1. Eine Vorrichtung zur Messung der Position eines chirurgischen Instruments (1), ausgestattet mit mindestens zwei Begrenzern (2),
wobei jeder Begrenzer (2) eine Durchgangsöffnung aufweist, die kleiner als mindestens ein Teil des chirurgischen Instruments (1) ist und durch die Teile des chirurgischen Instruments (1) zu stecken sind,
wobei die genannte Vorrichtung die Form einer drehbar gelagerten Scheibe (3) hat, die auf der Innenseite ihrer Umhüllung eine Spur (4) aufweist, die als Führung für das chirurgische Instrument (1) dient,
**dadurch gekennzeichnet, dass** der erste Begrenzer (2) an der Scheibe (3) an einem der Enden der genannten Spur (4) befestigt ist und so konfiguriert ist, dass beim Heranführen des chirurgischen Instruments (1) an den ersten Begrenzer (2) und beim Andrücken eines Teils des chirurgischen Instruments (1), der größer ist als die Öffnung im ersten Begrenzer (2), eine Drehung der Scheibe (3) bewirkt wird,
wobei mindestens ein anderer Begrenzer (2) mittels eines schwenkbaren Messarms (5) an der Scheibe (3) befestigt ist,
und das Heranführen eines Teils des chirurgischen Instruments (1), der größer ist als die Öffnung in diesem anderen Begrenzer (2), an den zweiten Begrenzer (2) und das Drücken desselben gegen den genannten zweiten Begrenzer (2) bewirkt, dass sich der zweite Begrenzer (2) bewegt,
wobei die Durchgangsöffnung zum Einstecken des chirurgischen Instruments (1) in den genannten mindestens einen anderen Begrenzer
(2) kleiner ist als die Durchgangsöffnung zum Einstecken des chirurgischen Instruments (1) in den Begrenzer (2), der beim Einstecken des chirurgischen Instruments (1) von der Seite aus gesehen vorausgeht, insbesondere kleiner als die Durchgangsöffnung zum Einstecken des chirurgischen Instruments (1) in den ersten Begrenzer (2),
wobei die Scheibe (3) und jeder der Begrenzer (2) mit Widerstandsmitteln ausgestattet sind, die mit einer entsprechend angepassten Kraft oder einem entsprechend angepassten Drehmoment
auf die Scheibe (3) und auf jeden der Begrenzer (2) wirken und
deren Bewegung unter dem Einfluss des Drucks des chirurgischen Instruments (1) entgegenwirken,
wobei die Vorrichtung zusätzlich Mittel zur Messung des Drehwinkels der Scheibe (3) und
des Schwenkwinkels jedes von mindestens einem Messarm (5) aufweist und das Messergebnis in ein elektrisches Signal umwandelt.

2. Die Vorrichtung nach Anspruch 1, **dadurch gekennzeichnet, dass** die Mittel zur Messung des Drehwinkels
der Scheibe (3) die Form eines Winkelsensors, zum Beispiel eines absoluten Encoders, eines inkrementalen Encoders, eines Potentiometers oder eines Drehmelders, haben.

3. Die Vorrichtung nach Anspruch 2, **dadurch gekennzeichnet, dass** die Mittel zur Messung des Schwenkwinkels
jedes von mindestens einem Messarm (5) die Form eines Winkelsensors, zum Beispiel eines absoluten Encoders, eines inkrementalen Encoders oder eines Potentiometers, haben.

4. Die Vorrichtung nach Ansprüchen 2 oder 3, **dadurch gekennzeichnet, dass** die Vorrichtung mit Klemmbacken zum Verriegeln
des chirurgischen Instruments (1) ausgestattet ist, die so konfiguriert sind, dass sie das chirurgische Instrument (1) in seiner Zielposition verriegeln und es erst entriegeln, wenn die Scheibe (3) in ihre Ausgangs-/Grundposition zurückkehrt.

5. Die Vorrichtung nach Ansprüchen 2, 3 oder 4, **dadurch gekennzeichnet, dass** sie drei Begrenzer (2) aufweist.

6. Die Vorrichtung nach Ansprüchen 2, 3, 4 oder 5, **dadurch gekennzeichnet, dass** sie vier Begrenzer (2) aufweist.

7. Die Vorrichtung nach Ansprüchen 2, 3, 4, 5 oder 6, **dadurch gekennzeichnet, dass** sie zusätzlich ein Führungselement
(6) aufweist, das so ausgebildet ist, dass es das von oben eingesteckte chirurgische Instrument (1) in Bezug auf die Rotationsebene der Scheibe (3) in die Richtung umlenkt, die mit der Spur der Scheibe (4) übereinstimmt.

8. Die Vorrichtung nach Ansprüchen 2, 3, 4, 5, 6 oder 7, **dadurch gekennzeichnet, dass** alle Widerstandsmittel in geeigneter Weise aus der Gruppe der Mittel ausgewählt sind, die Federn, Teile aus einem Elastomer und einen Elektromotor umfasst.

9. Die Vorrichtung nach einem der vorstehenden Ansprüche, **dadurch gekennzeichnet, dass** mindestens ein Begrenzer (2) außer dem ersten Begrenzer (2) an einem Ring, der an der Außenfläche der Scheibe (3) befestigt ist, oder an einer Linearführung angebracht ist.

10. Die Vorrichtung nach einem der vorstehenden Ansprüche, **dadurch gekennzeichnet, dass** sie ebenfalls optische Sensoren aufweist, die sich hinter dem ersten Begrenzer (2) befinden und so konfiguriert sind, dass sie die Ausrichtung des chirurgischen Instruments (1) messen.

11. Die Vorrichtung nach einem der Ansprüche 1 bis 10, **dadurch gekennzeichnet, dass** sie ebenfalls Beschleunigungssensoren aufweist, die sich im Gehäuse/Griff des chirurgischen Instruments (1) befinden und so konfiguriert sind, dass sie die Ausrichtung des chirurgischen Instruments (1) messen.

12. Die Vorrichtung nach einem der Ansprüche 1 bis 11, **dadurch gekennzeichnet, dass** die Begrenzer (2) - anstelle von Öffnungen, die kleiner sind als die betreffenden Teile des chirurgischen Instruments (1) - Mittel zum Blockieren des bestimmten Teils des chirurgischen Instruments (1) umfassen, entweder in Form einer Bremse oder von Mitteln, die magnetisch auf den bestimmten Teil des chirurgischen Instruments (1) einwirken.

13. Ein System zur Simulation von Transkathetervorgängen, das Folgendes umfasst:
- eine Testpuppe (7),
- ein chirurgisches Instrument (1), insbesondere solches, das zur Durchführung von Transkathetervorgängen verwendet wird,
- eine Vorrichtung zur Messung der Position und gegebenenfalls der Ausrichtung des chirurgischen Instruments (1), das mit den Elementen der Vorrichtung zusammenwirkt, die im Inneren der Testpuppe (7) angeordnet ist,
- eine Rechenvorrichtung (8), die geeignet ist, Daten über die Messung der Position und optional der Ausrichtung des chirurgischen Instruments (1) umzuwandeln sowie Bilder anzuzeigen, die der spezifischen Position und optionalen Ausrichtung des chirurgischen Instruments (1) entsprechen,
**dadurch gekennzeichnet, dass** es die in einem der Ansprüche 1 bis 12 angegebene Vorrichtung zur Messung der Position eines chirurgischen Instruments (1) umfasst.

## Revendications

1. Un dispositif pour mesurer la position d'un instrument chirurgical (1), équipé d'au moins deux limiteurs (2),
dans laquelle chaque limiteur (2) présente une ouverture de passage plus petite qu'au moins une partie de l'instrument chirurgical (1), à travers laquelle des parties de l'instrument chirurgical (1) doivent être insérées,
ledit dispositif ayant la forme d'un disque monté à rotation (3), qui, sur le côté intérieur de son enveloppe, présente une piste (4) qui sert de guide pour l'instrument chirurgical (1),
**caractérisé en ce que** le premier limiteur (2) est attaché au disque (3) à l'une des extrémités de ladite piste (4) et est configuré de telle sorte que lorsque l'instrument chirurgical (1) est amené à la première butée (2) et qu'une partie de l'instrument chirurgical (1) qui est plus grande que l'ouverture dans le premier limiteur (2) est appuyée contre le premier limiteur (2), une rotation du disque (3) est provoquée,
dans lequel au moins un autre limiteur (2) est attaché au disque (3) au moyen d'un bras de mesure pivotant
(5), et amener une partie de l'instrument chirurgical (1) qui est plus grande que l'ouverture de cet autre limiteur (2) vers le second limiteur (2) et la faire appuyer contre ledit second limiteur (2) provoquent le déplacement du second limiteur (2),
dans lequel l'ouverture de passage pour l'insertion de l'instrument chirurgical (1) dans ledit au moins un autre
limiteur (2) est plus petite que l'ouverture de passage pour l'insertion de l'instrument chirurgical (1) dans le limiteur (2) qui le précède en regardant depuis le côté depuis lequel l'instrument chirurgical (1) doit être inséré, en particulier, plus petite que l'ouverture de passage pour l'insertion de l'instrument chirurgical (1) dans le premier limiteur (2),
dans lequel le disque (3) et chacun des limiteurs (2) sont équipés de moyens de résistance qui agissent - avec une
force ou un couple convenablement adapté - sur le disque (3) et sur chacun des limiteurs (2) en s'opposant à
leur mouvement sous l'influence de la pression de l'instrument chirurgical (1),
dans lequel le dispositif comporte en outre des moyens pour mesurer l'angle de rotation du disque (3) et
l'angle de pivotement de chacun d'au moins un bras de mesure (5) et convertir le résultat de la mesure en un signal électrique.

2. Le dispositif selon la revendication 1, **caractérisé en ce que** les moyens de mesure de l'angle de rotation du
disque (3) prennent la forme d'un capteur angulaire tel qu'un codeur absolu, un codeur incrémental, un potentiomètre ou un résolveur.

3. Le dispositif selon la revendication 2, **caractérisé en ce que** les moyens de mesure de l'angle de pivotement de
chacun d'au moins un bras de mesure (5) prennent la forme d'un capteur angulaire tel qu'un codeur absolu, un codeur incrémental ou un potentiomètre.

4. Le dispositif selon les revendications 2 ou 3, **caractérisé en ce que** le dispositif est équipé de mâchoires de blocage de
l'instrument chirurgical (1), configurées de manière à bloquer l'instrument chirurgical (1) dans sa position cible et à ne le débloquer que lorsque le disque (3) revient dans sa position initiale/base.

5. Le dispositif selon les revendications 2, 3 ou 4, **caractérisé en ce qu'**il a trois limiteurs (2).

6. Le dispositif selon les revendications 2, 3, 4 ou 5, **caractérisé en ce qu'**il a quatre limiteurs (2).

7. Le dispositif selon les revendications 2, 3, 4, 5 ou 6, **caractérisé en ce qu'**il a en outre un élément de guidage
(6) attaché au disque (3) et configuré de manière à réorienter l'instrument chirurgical (1) introduit par le haut par rapport au plan de rotation du disque (3) dans la direction concourante à la piste du disque (4).

8. Le dispositif selon les revendications 2, 3, 4, 5, 6 ou 7, **caractérisé en ce que** tous les moyens de résistance sont convenablement choisis au sein du groupe de moyens qui comprend les ressorts, les pièces en élastomère et un moteur électrique.

9. Le dispositif selon l'une quelconque des revendications précédentes, **caractérisé en ce qu'**au moins un limiteur (2), à part le premier limiteur (2), est monté sur une bague qui est attachée à la surface externe du disque (3) ou sur un guide linéaire.

10. Le dispositif selon l'une quelconque des revendications précédentes, **caractérisé en ce qu'**il a également des capteurs optiques situés derrière le premier limiteur (2), configurés de manière à mesurer l'orientation de l'instrument chirurgical (1).

11. Le dispositif selon l'une quelconque des revendications 1 à 10, **caractérisé en ce qu'**il a également des capteurs accélérométriques situés dans le boîtier/poignée de l'instrument chirurgical (1), configurés de manière à mesurer l'orientation de l'instrument chirurgical (1).

12. Le dispositif selon l'une quelconque des revendications 1 à 11, **caractérisé en ce que** - au lieu d'ouvertures plus petites que les parties concernées de l'instrument chirurgical (1) - les limiteurs (2) comprennent des moyens de blocage de la partie spécifique de l'instrument chirurgical (1), sous la forme d'un frein ou de moyens affectant magnétiquement la partie spécifique de l'instrument chirurgical (1).

13. Un système pour simuler des opérations de transcathéter, qui comprend :
- un mannequin (7),
- un instrument chirurgical (1), notamment du type utilisé pour effectuer des opérations de transcathéter,
- un dispositif pour mesurer la position et, éventuellement, l'orientation de l'instrument chirurgical (1) interagissant avec les éléments du dispositif, placé à l'intérieur du mannequin (7),
- un dispositif informatique (8) adapté pour convertir des données concernant la mesure de la position et, facultativement, de l'orientation de l'instrument chirurgical (1), ainsi que pour afficher des images correspondant à la position spécifique et à l'orientation facultative de l'instrument chirurgical (1),
**caractérisé en ce que** il comprend le dispositif de mesure de la position d'un instrument chirurgical (1) spécifié dans l'une quelconque des revendications 1 à 12.
